Europäisches Patentamt

European Patent Office

Office européen des brevets

(11) Numéro de publication: **0 267 063 B1**

(12) **FASCICULE DE BREVET EUROPEEN**

(45) Date de publication de fascicule du brevet: **19.02.92** (51) Int. Cl.⁵: **F16C 3/02**, B29C 67/18, F16L 11/11, F16L 33/00

(21) Numéro de dépôt: **87402106.6**

(22) Date de dépôt: **22.09.87**

---

(54) **Raccord pour arbre comportant une armure de renfort et procédé de fabrication de ce raccord.**

---

(30) Priorité: **07.10.86 FR 8614040**

(43) Date de publication de la demande:
**11.05.88 Bulletin  88/19**

(45) Mention de la délivrance du brevet:
**19.02.92 Bulletin  92/08**

(84) Etats contractants désignés:
**BE DE ES GB IT NL SE**

(56) Documents cités:
**FR-A- 2 040 579      FR-A- 2 152 289**
**FR-A- 2 207 577      FR-E- 88 324**
**FR-E- 90 913         GB-A- 2 165 026**

(73) Titulaire: **INSTITUT FRANCAIS DU PETROLE
4, Avenue de Bois Préau
F-92502 Rueil-Malmaison(FR)**

(72) Inventeur: **Do, Anh Tuan
Résidence Beauregard 35 avenue Saut du Loup
F-78170 La Celle Saint Cloud(FR)**
Inventeur: **Huvey, Michel
2, avenue des Pinsons
F-78380 Bougival(FR)**

## Description

La présente invention concerne un perfectionnement aux raccords pour arbres rigides ou flexibles, tels des tubes ou des câbles, comportant une armature de renfort résistant au moins aux efforts de traction, ladite armature étant constituée de fils libres de se déplacer entre eux sur la partie de l'arbre extérieure au raccord, ainsi qu'une méthode pour la réalisation de tels raccords.

De tels arbres peuvent être des tubes de transfert de fluide, tels que des effluents pétroliers.

L'invention est particulièrement bien adaptée aux arbres soumis à de hautes pressions internes et à la fatigue due notamment aux variations différentielles de pression, de traction ou de flexion. Elle s'applique à toutes les sortes de matériaux de fils d'armature tels métal, Kevlar, polyamide, fibres de verre ou de carbone imprégnées de matière plastique stabilisable, disposés en nappes de fils parallèles ou en tresses.

Par matière plastique stabilisable, on entend les corps pouvant prendre une forme stable par un processus physique ou chimique tel que fusion avec refroidissement ou réticulation. Ces matériaux peuvent être, par exemple, des matériaux thermoplastiques, des matériaux thermodurcissables, des élastomères, ou des métaux.

Le transfert des efforts d'un tronçon d'arbre comprenant des armatures libres au tronçon suivant ou à un point d'ancrage est réalisé au moyen de raccords. Il existe de nombreux types de raccords. Certains raccords sont dits "tréfilés", d'autres sont dits "à coins", d'autres enfin sont dits "culottés".

Les raccords tréfilés utilisent, au moins pour l'armature de traction, l'encastrement des fils de cette armature dans un bloc de matière malléable, ce bloc est formé et auto-encastré dans la forme interne conique du raccord par l'opération dite de tréfilage.

Les raccords à coins réalisent l'ancrage d'au moins l'armature de traction par coincement de ses fils entre des mors durs qui s'interpénètrent.

Les raccords culottés assurent l'ancrage d'au moins l'armature de traction par coincement dans une forme conique interne du raccord d'un culot noyant l'extrémité des fils d'armatures, celui-ci peut être obtenu par coulage, par injection, ou par tout autre moyen d'imprégnation des fils. La compression triaxiale du culot dans la forme conique permet le maintien des fils. Les produits utilisés pour le culottage sont des matériaux liquides au façonnage, solides et résistants à la déformation lors de l'utilisation, tels des métaux ou des résines thermodurcissables.

Que les arbres soient rigides ou flexibles, des câbles ou des tubes, les performances de ces raccords sont rarement égales à l'unité. C'est-à-dire que le câble ou le tube casse au ras du raccord ou même à l'intérieur de celui-ci, pour des efforts qui atteignent rarement la valeur calculée d'après la résistance propre des brins. En règle générale, le tube casse au niveau du raccord pour des efforts qui sont rarement supérieurs aux deux tiers de la valeur calculée indiquée précédemment.

Ainsi, c'est seulement après une longue durée de vie en service statique que des câbles souples ou des tubes flexibles cassent en longueur courante, surtout s'ils sont essayés fléchis. La longueur courante d'un arbre correspond à la zone de l'arbre insensible à l'influence des raccords qu'il porte à ses extrémités. Pour un arbre de diamètre D, la longueur courante débute et finit à environ 2 à 3D du ras de chacun des raccords.

Dans certains cas, cependant, en utilisant des raccords culottés à la résine dans des cônes convenablement dimensionnés, le rendement est égal à l'unité et la rupture est obtenue en longueur courante.

Il est malgré tout rare que ce comportement favorable soit maintenu lorsque l'arbre flexible ainsi constitué subit une fatigue de flexion alternée ou de pression pulsée, cette fatigue se traduisant par une rupture au ras des raccords, lorsqu'elle n'a pas été préalablement induite en longueur courante par des phénomènes de corrosion, d'usure ou de grippage.

Les raccords culottés notamment à la résine, ne détériorent pas les extrémités des fils de l'armature et permettent une utilisation des arbres plus sévère en traction. Cependant, le phénomène d'affaiblissement en dynamique de la performance des raccords culottés oblige à notablement diminuer la charge exercée sur ces raccords et, par suite, les autres types de raccords lui sont souvent préférés, bien que ne présentant pas le même rendement à la mise en service, car leur rendement est ensuite maintenu au long de la durée de vie du matériel. La résistance initiale, plus faible, est ainsi maintenue intacte plus longtemps.

L'art antérieur peut être illustré par les documents FR-A-2.040.579 et FR-A-2.207.577. Le premier utilise un apport d'élastomère, (34a), (34b) et (35) pour rétablir les continuités suivantes : entre l'ame intérieure (3) et la voûte (9) d'une part, et l'enrobage extérieur (8) avec le capot (11) d'autre part. Ces masses d'élastomère n'ont pas d'autre rôle. Le deuxième montre un moyen d'ancrage de fils de renfort résistant à la traction dans un raccord de flexible. La gaine d'élastomère (7) assure uniquement l'étanchéité extérieure. Ces documents n'enseignent pas l'utilisation de coussin élastomérique tel que revendiqué dans la présente demande.

Le dispositif et le procédé de mise en oeuvre selon l'invention, permettent de conserver pendant des durées égales à la durée de vie de l'arbre flexible ou rigide, un rendement égal à l'unité pour des raccords culottés à la résine, et d'améliorer le rendement des raccords tréfilés et des raccords à coins, tout en maintenant leur durée de vie utile.

Le dispositif et le procédé selon l'invention consistent à interposer entre l'ancrage principal et le milieu ambiant (air, eau ou huile en règle générale), un matelas élastomérique dont la longueur et la raideur adaptées à la raideur propre des armures, de façon à permettre une adaptation régulière des rayons de courbure des fils sous l'effet des contraintes, et à supprimer l'effet d'encastrement, particulièrement sensible à la sortie de la résine d'ancrage, des coins, ou du bloc tréfilé.

De nombreux essais ont montré que, pour être totalement efficace, la longueur du matelas élastomèrique (mesurée dans le sens de l'axe de l'arbre flexible) doit être égale à au moins trois fois le rayon de giration des armures, soit environ dix fois l'épaisseur de l'armure pour une armure à base rectangulaire.

Les arbres renforcés pleins ou creux, rigides ou flexibles, comportent une ou plusieurs armatures, chacune d'elles étant proportionnée pour résister entre autre aux efforts de pression et/ou de traction. Chacune de ces armatures est composée d'une ou plusieurs couches de fils dont chacune constitue une armure.

Le rayon de giration est la racine carrée du quotient du moment d'inertie d'une section droite d'un corps solide, par rapport à son centre de gravité, par l'aire de la section.

Sans aucun inconvénient, cette longueur peut être augmentée, dans la mesure où cette augmentation n'entraîne pas de conséquences graves sur la longueur des raccords.

Telle qu'elle est revendiquée, l'invention fournit un raccord pour un arbre comportant au moins une armature de renfort constituée de fils libres résistant au moins aux efforts de traction, une des extrémités de l'armature étant solidarisée au raccord par des moyens d'ancrage.

Ce raccord comporte un matelas élastomérique traversé par les fils de ladite armature, ledit matelas étant situé à proximité immédiate desdits moyens d'ancrage, ledit matelas ayant une longueur mesurée dans le sens de l'axe de l'arbre flexible égale à au moins trois fois le rayon de giration des armures, et possédant un module d'élasticité longitudinal (module de Young) compris entre 2 MPa et 200 MPa; ladite longueur et ladite raideur sont adaptées à la raideur propre des armatures, de façon à permettre une adaptation régulière des rayons de courbure des fils sous l'effet des contraintes, et à supprimer l'effet d'encastrement, particulièrement sensible à la sortie des moyens d'ancrage comportant un noyau de forme extérieure tronconique solidaire desdits fils, ledit noyau coopérant avec un capot solidaire du raccord pour réaliser l'ancrage de l'arbre au raccord.

L'arbre du raccord selon l'invention pourra être un tube flexible de transfert de fluide.

Le tube pourra comporter une armature de renfort résistant à la pression, qui sera séparée de l'armature de renfort résistant à la traction sur au moins la longueur comprise entre le matelas élastomérique et l'extrémité d'une des armatures par une voûte, et une partie au moins du matelas pourra être située entre la voûte et le capot.

L'armature de renfort résistant à la traction pourra être constituée d'une tresse.

Le noyau et le matelas élastomérique pourront ne constituer qu'une seule pièce.

L'invention fournit également un procédé de fabrication d'un raccord pour arbre comportant une armature de renfort constituée de fils libres et résistant au moins aux efforts de traction, une des extrémités de ladite armature étant solidarisée audit raccord par des moyens d'ancrage.

Ce procédé comporte les étapes suivantes :

- on introduit dans ladite armature de renfort résistant à la traction, une masse d'élastomère cru éventuellement mélangée à ses agents de vulcanisation, cette masse étant sensiblement située au ras desdits moyens d'ancrage une fois le raccord fabriqué,

- on réalise l'ancrage desdits fils de l'armature par l'intermédiaire d'un noyau de forme extérieure tronconique solidaire desdits fils, ledit noyau coopérant avec un capot solidaire du raccord, et

- on produit la vulcanisation de ladite masse d'élastomère, ladite masse d'élastomère formant un matelas ayant une longueur mesurée dans le sens de l'axe de l'arbre flexible égale à au moins trois fois le rayon de giration des armatures, et possédant un module d'élasticité longitudinal (module de Young) compris entre 2 MPa et 200 MPa, et en ce que ladite longueur et ladite raideur sont adaptées à la raideur propre des armatures, de façon à permettre une adaptation régulière des rayons de courbure des fils sous l'effet des contraintes, et à supprimer l'effet d'encastrement, particulièrement sensible à la sortie desdits moyens d'ancrage.

On pourra procéder à l'introduction de la masse d'élastomère dans l'armature de traction en réalisant les étapes successives suivantes :

- on place au-dessous et/ou au-dessus de l'armature de traction un cordon d'élastomère cru, et

- on réalise, sur ce ou ces cordons, une pression suffisante pour permettre le fluage de l'élastomère à travers les fils de l'armature.

On pourra introduire la masse d'élastomère cru dans l'armature par injection.

Le procédé, appliqué à un raccord où l'ancrage des fils est effectué par culottage dans un noyau de forme extérieure sensiblement tronconique, le noyau coopérant avec une forme intérieure conique du raccord pour réaliser l'ancrage des fils, pourra comporter les étapes suivantes :

- on commence par introduire la masse d'élastomère cru dans l'armature, de manière à ce que la masse coopérant avec la forme intérieure délimite une cavité d'implantation du noyau,
- on réalise une introduction dans la cavité d'une matière devant composer le noyau, et
- on produit la vulcanisation de la masse d'élastomère,

l'ordre de ces deux dernières étapes peut être inversé.

On pourra réaliser simultanément une réticulation de la matière du noyau et une vulcanisation de la masse élastomérique.

La description qui va suivre et qui ne présente aucun caractère limitatif, permettra à l'homme du métier de mieux comprendre comment la présente invention peut être mise en oeuvre. Elle est illustrée par les figures annexées où :

- la figure 1 représente une demi coupe axiale d'un exemple d'utilisation d'un matelas élastomèrique selon l'invention appliqué à un raccord culotté.
- la figure 2 illustre une première étape de réalisation du matelas élastomérique du raccord représenté à la figure 1, et
- la figure 3 montre une deuxième étape de réalisation du matelas élastomérique du raccord schématisé à la figure 1.

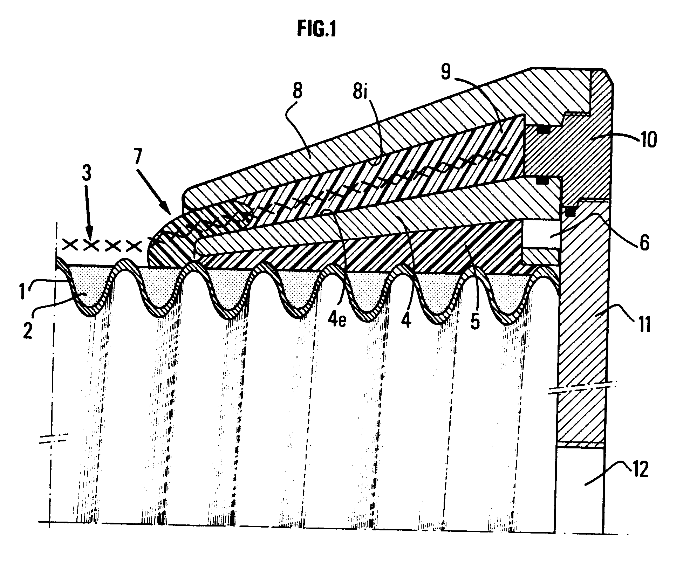

Sur la figure 1, le flexible est constitué, comme décrit dans le brevet FR-A-2.553.860, par une gaine interne ondulée 1 métallique de 0,4 mm d'épaisseur, de 50 mm de diamètre intérieur et 60 mm de diamètre extérieur dont les ondes sont remplies d'un renfort 2 composite comportant des filaments de verre et de la résine époxyde moulée in-situ dans des proportions de 71 % en poids de verre et de 29 % en poids de résine.

L'ensemble ainsi constitué est recouvert d'une tresse 3 de fils d'aramide Kevlar 49 qui est une marque déposée de Du Pont De Nemours.

La gaine 1 et son renfort 2 sont principalement destinés à résister à la composante circonférentielle de la pression interne alors que la tresse 3 assure au moins la résistance à la traction longitudinale.

Aux extrémités de ce flexible sont placées diverses pièces formant raccord étanche. Pour sa fabrication, on pose sur la gaine 1 armée du renfort 2, la voûte 4 de formes intérieures et extérieures coniques. La voûte 4 définit avec le tube flexible un espace 5 que l'on remplit, par les trous d'injection 6, de résine thermodurcissable, ou de matériau stabilisable qui permet de réaliser une étanchéité entre le tube flexible et la voûte 4.

La forme tronconique du joint placé dans l'espace 5 contribue avec la compression triaxiale exercée par l'effet de la pression interne du tube, à réaliser une auto-étanchéité du joint.

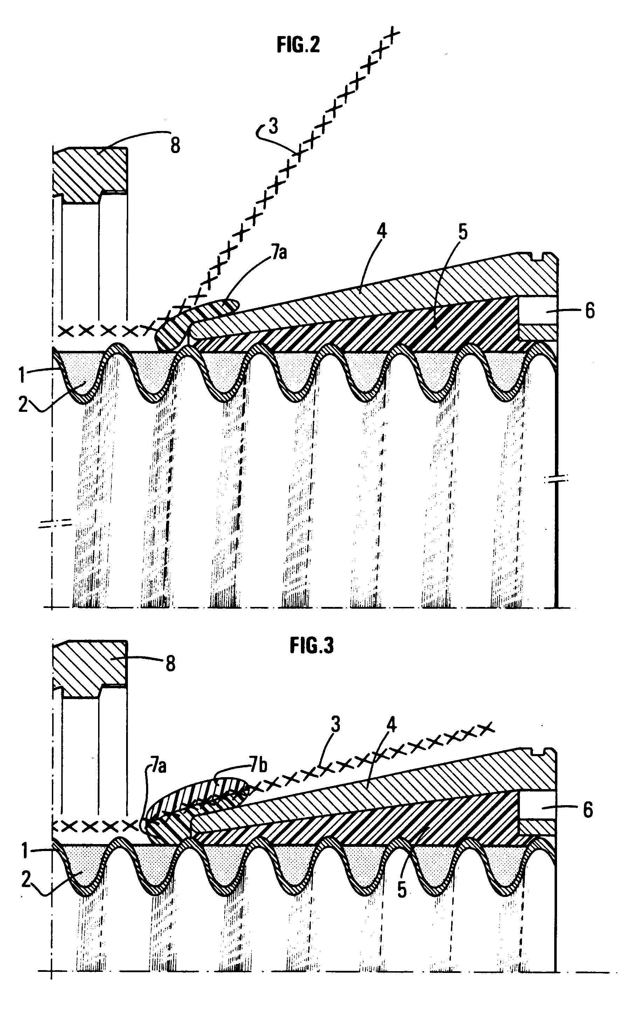

Après pose de la voûte 4, la tresse 3 étant écartée, ou retournée, ou encore soulevée (Fig. 2), on pose à l'extrémité de plus petit diamètre un cordon 7a d'élastomère silicone cru, préalablement mélangé à son catalyseur de vulcanisation. La tresse 3 est ensuite remise en place sur la voûte 4 (Fig. 3), et un deuxième cordon d'élastomère silicone 7b est posé de l'autre côté de la tresse, en face du premier cordon. Les deux cordons sont ensuite amenés à se rejoindre par fluage à travers la tresse, en appliquant une légère pression, par exemple au moyen d'un ruban adhésif. La réunion des deux cordons réalise donc le matelas élastomérique 7.

Ce matelas peut-être composé d'une grande variété d'élastomères dont les caractéristiques, notamment le module d'élasticité longitudinal, sont adaptées aux caractéristiques des fils de la tresse, ou plus généralement aux caractéristiques, telles que nature, nombre, dimensions, des fils de l'armature de traction. Ces élastomères ou toutes substances caoutchouteuses naturelles ou synthétiques ayant une résistance à la limite élastique suffisante auront un module d'Young compris entre 2 et 200 MPa.

Après mise en place du matelas élastomérique 7 et sa vulcanisation, on installe le capot 8 (Fig. 1). Puis dans l'espace 9 délimité par la surface conique interne 8i du capot 8 et la surface conique externe 4e de la voûte 4, le matelas 7, on coule par l'ouverture de l'espace 9 comprise entre le capot 8 et la voûte 4 placée vers le haut la résine époxy et son durcisseur tout autour de la tresse sans qu'aucune précaution particulière concernant son agencement n'ait été prise. La résine époxy est du tpe DGEBA (Diglycidyléther du Bisphenol A) et le durcisseur de la TMD (Triméthylhexaméthylène diamine).

Avant ou après avoir réticulé la résine qui remplit l'espace 9 et qui constitue la matière du noyau, on emboîte le talon 10 du raccord sur la voûte 4 de tout en le vissant sur le capot 8. Le talon 10 assure normalement la liaison du flexible ou plus généralement de l'arbre soit avec un autre arbre, soit avec un point d'ancrage.

Mais pour tester le raccord et le flexible, le talon 10 a été muni d'un opercule 11 muni d'une orifice 12.

Comme matériau d'ancrage de la tresse, on aurait pu utiliser tout autre produit pouvant être coulé ou injecté, durcissable de caractéristiques adaptées. Des élastomères identiques ou différents de celui qui réalise le matelas élastique pourraient aussi être utilisés.

La forme rétrécie du culot occupant l'espace 9 permet un ancrage efficace de la tresse 3.

On réalise un raccord identique à l'autre extrémité du tube.

Le tube comportant ces raccords est ensuite raccordé par l'orifice 12 à une pompe hydraulique permettant un accroissement régulier de la pression dans la tube. Des essais de mise sous pression ont montré que le déchirement d'un tel tronçon de tube se produisait à une pression de 285 bars au milieu du tube et non au raccord.

Cette valeur maximum de la pression statique est à comparer à celle d'un même tube avec les mêmes manchons, mais sans la présence du matelas élastomérique.

Dans l'essai du tube avec raccord sans matelas, on obtient la rupture du tube au ras du raccord à une pression de 145 bars. Pur cet essai, contrairement au premier essai, on a pris soin de disposer au mieux la tresse sous un angle de fil constant.

Dans un deuxième exemple d'utilisation du raccord selon l'invention comportant un matelas élastomérique, le tube qui est flexible est constitué d'un feuillard d'acier inox de 0,8 mm agrafé de 250 mm de diamètre intérieur revêtu d'une gaine de Rilsan (qui est une marque déposée par Atochem) extrudée de diamètre extérieur 298 mm, elle-même recouverte de deux couches de fils composites résistantes au moins aux efforts de traction et constituées comme dans le brevet FR-A-2.494.401.

Les deux couches de fils sont croisées et chacune posée à 55° par rapport à l'axe du tube.

Comme dans la réalisation illustrée par la figure 1, une voûte est posée sur le feuillard et la gaine de Rilsan sous les deux couches de fils constituant l'armature de renfort, et une résine est introduite entre la gaine et la voûte pour assurer l'étanchéité. Les armatures de renfort sont posées entre la voûte et le capot.

On réalise l'ancrage des fils en réalisant un culot de résine époxy de 30 cm de long entre voûte et capot.

Après gélification de la résine, on coule entre la voûte et le capot à l'émergence des fils, un matelas d'élastomère de polyuréthane de 10 cm de longueur et de dureté shore A égale à 85.

Le raccord est terminé par introduction et vissage du talon et de l'opercule sur la voûte et le capot.

Après vulcanisation à température ambiante de l'élastomère polyuréthane, l'ensemble est recuit pour assurer la fin du durcissement de la résine époxy.

Un autre manchon operculé est placé à l'autre extrémité du tube. Le tube est alors placé sur un banc d'essai en flexion dynamique et maintenu sous une pression de 200 bars. L'essai est arrêté sans rupture après six millions de cycles.

Cette valeur est à rapprocher des trois millions cinq cents mille cycles obtenus dans les mêmes conditions, avant rupture au ras du raccord, d'un flexible identique équipé d'un manchon similaire mais dépourvu de matelas élastomérique et ayant une longueur de culottage de 40 cm au lieu de 30 cm.

La rupture du même type de tube équipé d'un même raccord sans matelas élastomérique soumis à un essai statique en pression est obtenue à 540 bars sur la longueur courante du tube.

Les exemples précédemment décrits d'utilisation d'un matelas élastomérique selon l'invention, sont appliqués à des raccords culottés et des tubes flexibles comportant une armature de résistance à la pression et une armature de résistance à la traction, ces armatures étant séparées l'une de l'autre au niveau du raccord par une voûte.

On ne sortira pas du cadre de la présente invention en supprimant la voûte de séparation, en plaçant les extrémités de l'ensemble d'armatures dans un même culot et en disposant un matelas élastomèrique selon le procédé décrit, ce materlas étant traversé pas au moins les fils de l'armature de traction et étant situé à proximité immédiate du culot.

**Revendications**

1.  Raccord pour un arbre comportant au moins une armature de renfort (3) constituée de fils libres résistant au moins aux efforts de traction, une des extrémités de ladite armature étant solidarisée au raccord par des moyens d'ancrage, caractérisé en ce que le raccord comporte un matelas élastomérique (7) traversé par les fils de ladite armature, ledit matelas étant situé à proximité immédiate desdits moyens d'ancrage, ledit matelas ayant une longueur mesurée dans le sens de l'axe de l'arbre flexible égale à au moins trois fois le rayon de giration des armatures, et possédant un module d'élasticité longitudinal (module de Young) compris entre 2 MPa et 200 MPa, et en ce que ladite longueur et ladite raideur sont adaptées à la raideur propre des armatures, de façon à permettre une adaptation régulière des rayons de courbure des fils sous l'effet des contraintes, et à supprimer l'effet d'encastrement, particulièrement sensible à la sortie des moyens d'ancrage comportant un noyau (9) de forme extérieure tronconique solidaire desdits fils, ledit noyau coopérant avec un capot (8) solidaire du raccord pour réaliser l'ancrage de l'arbre au raccord.

2. Raccord selon la revendication 1, caractérisé en ce que l'arbre est un tube flexible de transfert de fluide.

3. Raccord selon la revendication 2, caractérisé en ce que ledit tube comporte une armature de renfort résistant à la pression (1, 2), en ce que l'armature de renfort résistant à la pression est séparée de l'armature de renfort résistant à la traction (3) sur au moins la longueur comprise entre le matelas élastomérique (7) et l'extrémité d'une des armatures par une voûte (4), et en ce qu'au moins une partie dudit matelas est situé entre ladite voûte (4) et ledit capot (8).

4. Raccord selon l'une des revendications 1 à 3, caractérisé en ce que l'armature de renfort résistant à la traction comprend une tresse (3).

5. Raccord selon l'une des revendications 1 à 4, caractérisé en ce que ledit noyau (9) et ledit matelas élastomérique (7) ne constituent qu'une seule pièce.

6. Procédé de fabrication d'un raccord pour arbre comportant au moins une armature de renfort (3) constituée de fils libres résistant au moins aux efforts de traction, une des extrémités de ladite armature étant solidarisée audit raccord par des moyens d'ancrage, le procédé comporte les étapes suivantes :
   - on introduit dans ladite armature de renfort résistant à la traction, une masse d'élastomère cru éventuellement mélangée à ses agents de vulcanisation, cette masse étant sensiblement située au ras desdits moyens d'ancrage une fois le raccord fabriqué,
   - on réalise l'ancrage desdits fils de l'armature par l'intermédiaire d'un noyau (9) de forme extérieure tronconique solidaire desdits fils, ledit noyau coopérant avec un capot (8) solidaire du raccord, et
   - on produit la vulcanisation de ladite masse d'élastomère, ladite masse d'élastomère formant un matelas ayant une longueur mesurée dans le sens de l'axe de l'arbre flexible égale à au moins trois fois le rayon de giration des armatures, et possédant un module d'élasticité longitudinal (module de Young) compris entre 2 MPa et 200 MPa, et en ce que ladite longueur et ladite raideur sont adaptées à la raideur propre des armatures, de façon à permettre une adaptation régulière des rayons de courbure des fils sous l'effet des contraintes, et à supprimer l'effet d'encastrement, particulièrement sensible à la sortie desdits moyens d'ancrage.

7. Procédé selon la revendication 6, caractérisé en ce que l'on procède à l'introduction de la masse d'élastomère dans ladite armature de renfort résistant à la traction en réalisant les étapes successives suivantes :
   - on place au-dessous et/ou au-dessus de ladite armature de renfort résistant à la traction un cordon d'élastomère cru, et
   - on réalise, sur ce ou ces cordons, une pression suffisante pour permettre le fluage de l'élastomère à travers les fils de ladite armature.

8. Procédé selon la revendication 6, caractérisé en ce que l'on introduit ladite masse d'élastomère cru dans l'armature par injection.

9. Procédé selon l'une des revendications 6 à 8, où l'ancrage des fils est effectué par culottage dans un noyau de forme extérieure sensiblement tronconique, ledit noyau coopérant avec une forme intérieure conique du raccord pour réaliser l'ancrage desdits fils, caractérisé en ce que :
   - on commence par introduire la masse d'élastomère cru dans ladite armature, de manière à ce que ladite masse coopérant avec ladite forme intérieure délimite une cavité d'implantation dudit noyau,
   - on réalise une introduction dans ladite cavité d'une matière devant composer ledit noyau, et
   - on produit la vulcanisation de ladite masse d'élastomère,
l'ordre de ces deux dernières étapes pouvant être inversé.

10. Procédé selon la revendication 9, où ladite matière devant composer le noyau est une matière réticulable, caractérisé en ce que l'on réalise simultanément la réticulation de ladite matière du noyau et la vulcanisation de ladite masse élastomérique.

**Claims**

1. Coupling for a shaft comprising at least one reinforcement framework (3) having free-moving threads resistant at least to the forces of traction, wherein one end of the framework is secured to the coupling by a means of anchorage, characterised in that the coupling includes an elastomer cushion (7) through which the threads of the framework pass, the cushion being positioned in immediate proximity to the means of anchorage and being of a length measured in the direction of the axis of the flexible shaft equal to at least three times the radius of gyration of the frameworks and having a longitudinal modulus of elasticity (Young's modulus) in the range between 2 MPa and 200 MPa, and in that the length and the tautness are adapted to the actual tautness of the frameworks in such a way as to enable regular adaptation of the radii of curvature of the threads under the effect of stress and to overcome the effect of embedding, particularly prevalent at the outlet of the anchorage means comprising a core (9) of an external truncated conical shape integral with the threads, the core working in conjunction with a cap (8) integral with the coupling so as to provide anchorage of the shaft to the coupling.

2. Coupling in accordance with claim 1, characterised in that the shaft is a flexible tube for the transfer of fluid.

3. Coupling in accordance with claim 2, characterised in that the tube comprises a pressure-resistant reinforcement framework (1, 2), and in that the pressure-resistant reinforcement framework is separated from the reinforcement framework resistant to traction (3) over at least the length formed by a vault (4) between the elastomer cushion (7) and the end of one of the frameworks and in that at least a part of the cushion is located between the vault (4) and the cap (8).

4. Coupling in accordance with one of claims 1 to 3, characterised in that the reinforcement framework resistant to traction comprises a rove (3).

5. Coupling in accordance with one of claims 1 to 4, characterised in that the core (9) and the elastomer cushion (7) are formed of a single piece.

6. Method for producing a coupling for a shaft comprising at least one reinforcement framework (3) made of free-moving threads resistant at least to the forces of traction, wherein one end of the framework is secured to the coupling by a means of anchoring, the method comprising the following stages :

- an untreated elastomer mass possibly mixed with its vulcanising agents is introduced into the traction-resistant reinforcement framework, the mass being located substantially at a level flush with the anchorage means once the coupling has been made,
- the threads of the framework are anchored by means of a core (9) with an external truncated conical shape integral with the threads, the core working together with a cap (8) integral with the coupling, and
- the elastomer mass is vulcanised, the elastomer mass forming a cushion of a length measured in the direction of the axis of the flexible tube equal to at least three times the radius of gyration of the frameworks and having a longitudinal modulus of elasticity (Young's modulus) of between 2 MPa and 200 MPa, and wherein the length and tautness are adapted to the actual tautness of the frameworks so as to permit regular adaptation of the radii of curvature of the threads under stress and to eliminate the effect of embedding, particularly prevalent at the outlet of the means of anchorage.

7. Method in accordance with claim 6, characterised in that the elastomer mass is introduced into the traction-resistant reinforcement framework in the following successive stages :

- a strand of untreated elastomer is placed underneath and/or on top of the traction-resistant reinforcement framework, and
- sufficient pressure is applied to this or these strands to permit the flow of the elastomer through the threads of the framework.

8. Method in accordance with claim 6, characterised in that the untreated elastomer mass is introduced into the framework by means of injection.

9. Method in accordance with one of claims 6 to 8, wherein the threads are anchored by means of plugging in a core of an external substantially truncated conical shape and wherein the core works in conjunction with an internal conical shape of the coupling to provide anchorage for the threads, characterised in that :

- the untreated elastomer is firstly introduced into the framework in such a way that the mass settling round the internal shape forms a cavity in which the core can be placed,

- a material that will form the core is introduced into the cavity, and

- the elastomer mass is vulcanised,

and in that the last two of the above stages may be performed in reverse order.

10. Method in accordance with claim 9, wherein the material that is to form the core can be cross-linked, characterised in that cross-linking of the core material and vulcanisation of the elastomer mass may be performed simultaneously.

**Patentansprüche**

1. Verbindungsstück für eine Welle mit wenigstens einer Verstärkungsbewehrung (3), die aus freien Drähten gebildet ist, die beständig wenigstens gegen Zugkräfte sind, wobei eines der Enden dieser Bewehrung an dem Verbindungsstück über Verankerungsmittel befestigt ist, dadurch gekennzeichnet, daß das Verbindungsstück eine Elastomermatte (7) umfaßt, die durch Drähte dieser Bewehrung durchsetzt ist, wobei die Matte in unmittelbarer Nachbarschaft dieser Verankerungsmittel angeordnet ist und eine in Richtung der Achse der flexiblen Welle gemessene Länge hat, die wenigstens gleich dem dreifachen Drehradius der Bewehrungen ist und einen Elastizitätsmodul in Längsrichtung (Young Modul) umfaßt, der zwischen 2 MPa und 200 MPa liegt und daß diese Länge und diese Steifigkeit eingestellt sind auf die Eigensteifigkeit der Bewehrungen, derart, daß eine regelmässige Anpassung der Krümmungsradien der Drähte unter dem Einfluß der Beanspruchungen möglich wird und der Einspanneffekt fortfällt, der besonders merkbar beim Austritt der Verankerungseinrichtung wird, die einen Kern (9) von einer konischen Außengestalt, die fest bezüglich der Drähte ist, umfaßt, wobei der Kern mit einer bezüglich des Verbindungsstücks festen Verschlußkappe (8) zusammenwirkt, um die Verankerung der Welle mit dem Verbindungsstück zu realisieren.

2. Verbindungsstück nach Anspruch 1, dadurch gekennzeichnet, daß die Welle eine flexible Fluidtransportröhre ist.

3. Verbindungsstück nach Anspruch 2, dadurch gekennzeichnet, daß diese Röhre eine druckfeste (1, 2) Verstärkungsbewehrung umfaßt, daß die gegen Druck beständige Verstärkungsbewehrung von der gegen Zug beständigen Verstärkungsbewehrung (3) über wenigstens die Länge zwischen der Elastomermatte (7) und dem Ende einer der Bewehrungen durch ein Wölbungsteil (4) getrennt ist und daß wenigstens ein Teil dieser Matte zwischen diesem Wölbungsteil (4) und der Verschlußkappe (8) angeordnet ist.

4. Verbindungsstück nach einem der Ansprüche 1 bis 3, dadurch gekennzeichnet, daß die gegen Zug beständige Verstärkungsbewehrung ein Geflecht (3) umfaßt.

5. Verbindungsstück nach einem der Ansprüche 1 bis 4, dadurch gekennzeichnet, daß dieser Kern (9) und diese Elastomermatte (7) nur ein einziges Stück bilden.

6. Verfahren zur Herstellung eines Verbindungsstücks für Wellen mit wenigstens einer Verstärkungsbewehrung (3), die aus freien wenigstens gegen Zugkräfte beständigen Drähten aufgebaut ist, wobei eines der Enden dieser Bewehrung mit dem Verbindungsstück über Verankerungsmittel befestigt ist, wobei das Verfahren die folgenden Stufen umfaßt:

- man führt in diese gegen Zug beständige Verstärkungsbewehrung eine rohe Elastomermasse, gegebenenfalls im Gemisch mit ihren Vulkanisationsmitteln, ein, wobei diese Masse im wesentlichen unmittelbar an diesen Verankerungsmitteln, sobald das Verbindungsstück einmal hergestellt ist, angeordnet ist,

- man stellt die Verankerung dieser Drähte der Bewehrung vermittels eines Kerns (9) von konischer Außengestalt, der fest bezüglich dieser Drähte ist, her, wobei der Kern mit einer mit dem Verbindungsstück festen Verschlußkappe (8) zusammenwirkt, und

- man erzeugt die Vulkanisierung dieser Elastomermasse, wobei die Elastomermasse eine Matte mit einer Länge, gemessen in Achsrichtung der flexiblen Welle, gleich wenigstens dem Dreifachen des Drehradius der Bewehrungen hat und einen Elastizitätsmodul in Längsrichtung (Young Modul) zwischen 2 MPa und 200 MPa aufweist und daß diese Länge und diese Steifigkeit eingestellt sind auf die Eigensteifigkeit der Bewehrungen, derart, daß eine regelmässige Anpassung der Krümmungsradien der Drähte unter dem Einfluß der Kräfte möglich wird und der Einspanneffekt aufgehoben wird, der besonders merklich beim Austritt dieser Verankerungsmittel ist.

7. Verfahren nach Anspruch 6, dadurch gekennzeichnet, daß man das Einführen der Elastomermasse in diese zugbeständige Verankerungsbewehrung vornimmt, indem man die folgenden Stufen durchführt:
- man ordnet unterhalb und/oder oberhalb dieser gegen Zug beständigen Verankerungsbewehrung eine Schnur aus Rohelastomer an, und
- realisiert an dieser oder diesen Schnüren einen ausreichenden Druck, der das Fließen des Elastomers quer durch die Drähte dieser Bewehrung ermöglicht.

8. Verfahren nach Anspruch 6, dadurch gekennzeichnet, daß man diese Rohelastomermasse in die Bewehrung durch Injektion einführt.

9. Verfahren nach einem der Ansprüche 6 bis 8, wo die Verankerung der Drähte vorgenommen wird, indem in einen Kern einer im wesentlichen konischen Außengestalt vergossen wird, wobei der Kern mit einer konischen Innenform des Verbindungsstücks zusammenwirkt, um die Verankerung dieser Drähte herbeizuführen, dadurch gekennzeichnet, daß:
- man damit beginnt, die Rohelastomermasse in diese Bewehrung derart einzuführen, daß diese mit der Innenform zusammenwirkende Masse einen Hohlraum zum Einpflanzen dieses Kerns begrenzt,
- daß man ein Einführen eines Materials, das diesen Kern bilden soll, in diesen Hohlraum vornimmt, und
- man die Vulkanisation dieser Elastomermasse hervorruft, wobei die Reihenfolge dieser beiden letztgenannten Stufen umkehrbar ist.

10. Verfahren nach Anspruch 9, wo diese Masse zur Bildung des Kerns eine vernetzbare Masse ist, dadurch gekennzeichnet, daß man gleichzeitig die Vernetzung dieses Materials des Kerns und die Vulkanisierung dieser Elastomermasse durchführt.

**FIG.1**

**FIG.2**

**FIG.3**